# EUROPÄISCHE PATENTSCHRIFT

(11) **EP 3 323 607 B1**
(45) Veröffentlichungstag und Bekanntmachung des Hinweises auf die Patenterteilung: **28.04.2021**
(21) Anmeldenummer: 17001806.3
(22) Anmeldetag: 06.11.2017
(51) Int. Cl.: B32B 5/02, B32B 7/12, B32B 25/10, B32B 25/14, E04D 5/02, E04D 5/06, E04D 5/10

(54) **BAHNMATERIAL ZUR BILDUNG VON DACHBELÄGEN**
SHEET MATERIAL FOR FORMING ROOF COVERINGS
MATIÈRE EN BANDE DESTINÉE À LA FORMATION DE COUVERTURES DE TOITS

(30) Priorität: 17.11.2016 DE 102016122145
(43) Veröffentlichungstag der Anmeldung: 23.05.2018
(73) Patentinhaber: CQLT SaarGummi Technologies S.à.r.l., 5544 Remich (LU)
(72) Erfinder: Bächler, Udo, 66649 Oberthal (DE); Schmitt, Sabine, 66620 Nonnweiler (DE)
(74) Vertreter: Patentanwälte Bernhardt / Wolff Partnerschaft mbB

(56) Entgegenhaltungen:
- WO-A1-2006/111037
- AT-B- 365 673
- DE-A1- 3 342 560
- DE-A1-102011 054 826
- US-A1- 2007 054 129
- US-A1- 2012 045 623
- HOLZAPFEL ET AL: "Werkstoffkunde fuer dach-, wand- und abdichtungstechnik", 1. Januar 2003 (2003-01-01), WERKSTOFFKUNDE FUER DACH-, WAND- UND ABDICHTUNGSTECHNIK,, PAGE(S) 223, 248-250, XP009503494, ISBN: 978-3-481-02025-5 * das ganze Dokument *

## Beschreibung

Die Erfindung betrifft ein Bahnmaterial zur Bildung von Dachbelägen, mit einer Lage aus einem Elastomerwerkstoff, die auf ihre Auflageseite mit einer weiteren Lage versehen ist, wobei die weitere Lage eine Glasfasergewebelage umfasst.

Bei bekanntem Dachbelagbahnmaterial wird als weitere Lage eine Polyestervlieskaschierung verwendet. Die Einsatzmöglichkeiten solchen Dachbelagbahnmaterials sind begrenzt.

Bahnmaterial mit den eingangs erwähnten Merkmalen, das eine Lage aus Elastomermaterial und eine mit der Elastomermateriallage verbundene Lage aus Glasfasergewebe umfasst, geht aus HOLZAPFEL ET AL: Werkstoffkunde fuer dach-, wand- und abdichtungstechnik", 1. Januar 2003 (2003-01-01), WERKSTOFFKUNDE FUER DACH-, WAND- UND ABDICHTUNGSTECHNIK" PAGE(S) 223, 248-250, XP009503494, ISBN: 978-3-481-02025-5 sowie der US 2012/045623 A1 und der DE 10 2011 054826 A1 hervor.

Gegenüber diesem Stand der Technik wird ein neues Dachbelagmaterial mit erweiterten Einsatzmöglichkeiten geschaffen, das dadurch gekennzeichnet ist, dass die Glasfasergewebelage mit einer Appretur versehen und in die Lage aus Elastomermaterial vor deren Vulkanisation eingepresst ist.

Vorteilhaft weist das Bahnmaterial nach der Erfindung erhöhte Festigkeitswerte in Verbindung mit vorteilhaften Eigenschaften hinsichtlich Brandschutz auf.

Vorzugsweise handelt es sich um eine Glasfasergewebelage aus sich kreuzenden Fäden, insbesondere sich senkrecht kreuzenden Fäden.

In einer besonders bevorzugten Ausführungsform der Erfindung ist die Glasfasergewebelage als Drehergewebe mit sich an den Kreuzungsstellen gegenseitig durchdringenden Fäden ausgebildet. Vorteilhaft ergibt sich auf diese Weise ein verhältnismäßig dünnes Gewebe mit geringer Eindringtiefe in die Elastomermateriallage.

Vorzugsweise sind die sich kreuzenden Fäden zueinander im Abstand angeordnet, wobei sich Maschen mit Abmessungen von zweckmäßig 5 x 5 mm ergeben.

Im Zuge der anschließenden Vulkanisierung kommt es dann vorteilhaft zu einer festen Verbindung zwischen den Lagen.

In weiterer vorteilhafter Ausgestaltung der Erfindung weisen die Fäden einen abgeflachten Querschnitt auf, insbesondere einen ovalen Querschnitt. Auch eine solche Fadenform kann zur Abflachung des Gewebes und damit zu vorteilhaft geringer Eindringtiefe in die Elastomermateriallage beitragen. Entsprechend dünn kann die Elastomermateriallage ausgebildet sein.

Es versteht sich, dass sich die längere Querschnittsachse der Fäden vorzugsweise parallel zu der Elastomermateriallage erstreckt.

In einer weiteren Ausführungsform der Erfindung kann das Bahnmaterial auf der Auflageseite selbstklebend mit einer durch eine Linerfolie abgedeckten Klebeschicht ausgebildet sein, wobei die Klebeschicht z.B. eine Acrylatkleberschicht ist.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: einen Ausschnitt aus einer erfindungsgemäßen Dachbelagmaterialbahn,
- Fig. 2: ein Detail der Materialbahn von Fig. 1,
- Fig. 3: ein Detail einer in der Bahn von Fig. 1 verwendeten Glasfasergewebelage,
- Fig. 4: eine die Herstellung der Materialbahn von Fig. 1 erläuternde Darstellung, und
- Fig. 5: ein weiteres Ausführungsbeispiel für eine erfindungsgemäße Dachbelagmaterialbahn ausschnittsweise in einem Querschnitt.

Eine gemäß Pfeil 1 zu einer Rolle aufwickelbare Bahn für die Bildung eines Dachbelags weist eine Lage 2 aus EPDM auf. In das EPDM-Material ist eine flammenhemmende Substanz eingebettet, die in dem gezeigten Beispiel Al(OH)₃ umfasst. Die Dicke der EPDM-Lage 2 liegt vorzugsweise zwischen 1,2 und 2 mm.

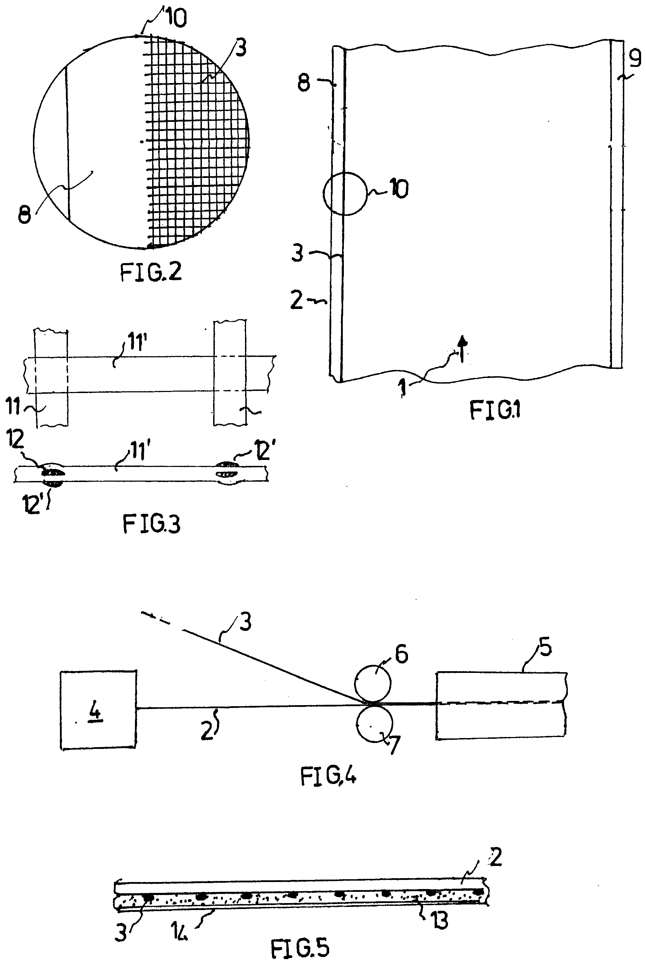

Auf ihrer der abzudeckenden Dachfläche zugewandten Unterseite ist die EPDM-Lage 2 mit einer weiteren Lage 3 aus Glasfasergewebe verbunden. Gemäß Fig. 4 wird diese Verbindung hergestellt, bevor die aus einem Kalander 4 austretende EPDM-Bahn 2 in eine die Bahn vulkanisierende Heizstrecke 5 gelangt. Zur Verbindung dienen Walzen 6 und 7, welche das als Bahn 3 zugeführte, z.B. mit einer Styrol-Butadien-Kautschuk-Appretur versehene Glasfasergewebe in die EPDM-Bahn 2 einpressen. Die Walze 7 dient ferner als eine die Oberfläche der EPDM-Bahn 2 profilierende Prägewalze. Im anschließenden Vulkanisationsprozess kommt es unter der Wärmeeinwirkung zu einer durch die Appretur vermittelten festen Verbindung zwischen der EPDM-Lage 2 und der weiteren Lage 3 aus Glasfasergewebe.

Wie Fig. 1 ferner zeigt, endet die Glasfasergewebelage 3 jeweils im Abstand von den Bahnrändern. In Randbereichen 8 und 9 ist die EPDM-Lage 2 jeweils mit einem Thermoplastmaterial beschichtet, das es erlaubt, nebeneinander überlappend verlegte EPDM-Bahnen 2 im Überlappungsbereich miteinander homogen zu verschweißen.

Wie die Detaildarstellung von Fig. 2 erkennen lässt, besteht die Glasfasergewebelage 3 in dem gezeigten Beispiel aus sich senkrecht kreuzenden Fäden, wobei Maschen mit Abmessungen von 5 x 5 mm gebildet sind. Die Flächenmasse des Glasfasergewebes liegt vorzugsweise zwischen 70 und 90 g/m², die Dicke des Glasfasergewebes vorzugsweise im Bereich von 0,15 bis 0,25 mm.

Die Fäden des Glasfasergewebes weisen einen ovalen Querschnitt auf, wobei sich vorzugsweise die längere der beiden Querschnittsachsen parallel zur Ebene der EPDM-Lage 2 erstreckt. Vorteilhaft kann dadurch die Dicke der weiteren Lage 3 gering gehalten werden. Bei dem in Fig. 4 gezeigten Herstellungsprozess dringt sie dann dementsprechend weniger tief in die EPDM-Lage 2 ein, die dann ihrerseits vorteilhaft eine geringere Dicke aufweisen kann.

Zur Abflachung der weiteren Lage 3 trägt auch die Ausbildung des Glasfasergewebes als sog. Drehergewebe bei, in welchem die sich kreuzenden Fäden sich teilweise gegenseitig durchdringen, wie dies in Fig. 3 dargestellt ist.

Ein Faden 11, der einen Faden 11' senkrecht kreuzt, durchdringt den Faden 11' etwa mit einem Hälftenteil 12, während ein zweiter Hälftenteil 12' den Faden 11' außen nur tangiert. Wie die Figuren 3a und b erkennen lassen, wechselt der tangierende Hälftenteil 12' von Faden 11 zu Faden 11 abwechselnd die Seite des tangierten Fadens 11'.

Die aus Glasfasergewebe bestehende Lage 3 verleiht dem Bahnmaterial im Unterschied zu den im Stand der Technik verwendeten Polyestervlieskaschierungen wesentlich verbesserte Eigenschaften in Bezug auf Stabilität und Brandschutz. So kann das vorangehend beschriebene Bahnmaterial z.B. bei unmittelbarer Verlegung auf Styropordämmungen von Dächern die Brandschutzanforderungen hinsichtlich Durchgriff von Flammen erfüllen.

Die Erhöhung der Stabilität, insbesondere der Zugfestigkeit, ermöglicht verringerten Aufwand für Verbindungen der verlegten Bahnen sowohl untereinander als auch mit der Dachträgerfläche. So kann die Breite der Randbereiche im Verhältnis zur Bahnbreite und dadurch der Aufwand für die Verschweißung der Bahnen untereinander verringert werden. Die erhöhte Zugfestigkeit des Bahnmaterials erlaubt auch eine Verringerung der Anzahl mechanischer Befestigungsstellen des Dachbelags an der Dachträgerfläche. Stellenweise befestigte Dachbeläge aus dem zugfesteren Bahnmaterial können erhöhten Windsogkräften widerstehen. Dazu trägt auch eine erhöhte Reißfestigkeit des Bahnmaterials bei.

Durch die Glasfasergewebelage 3 ist auch merklich die Formstabilität des Bahnmaterials verbessert, d.h. das Bahnmaterial weist eine hohe Maßhaltigkeit auf.

Durch die stabilisierende Wirkung der Glasfasergewebelage 3 können im Ausgleich die Stabilität der Bahnkomponente aus Elastomerwerkstoff herabsetzende, und z.B. die Brandschutzeigenschaften beeinflussende Füllsubstanzen in verstärktem Maße eingesetzt werden.

Fig. 5 zeigt eine weitere Ausführungsform, in welcher das Bahnmaterial selbstklebend mit einer Klebeschicht 13 versehen ist. Die vorzugsweise aus Acrylatkleber bestehende Schicht 13 ist durch eine Linerfolie 14 abgedeckt, die unmittelbar vor der Verarbeitung des Bahnmaterials zu entfernen ist.

## Patentansprüche

1. Bahnmaterial zur Bildung von Dachbelägen, mit einer Lage (2) aus Elastomerwerkstoff, die auf ihrer Auflageseite mit einer weiteren Lage (3) versehen ist, wobei die weitere Lage eine Glasfasergewebelage (3) umfasst,
**dadurch gekennzeichnet,**
**dass** die Glasfasergewebelage (3) mit einer Appretur versehen und in die Lage (2) aus Elastomermaterial vor deren Vulkanisierung einpresst ist.

2. Dachbelagbahnmaterial nach Anspruch 1,
**dadurch gekennzeichnet,**
**dass** die Lage (3) eine Gewebelage, insbesondere Gewebelage aus sich kreuzenden Fäden, insbesondere sich senkrecht kreuzenden Fäden, ist.

3. Dachbelagbahnmaterial nach Anspruch 2,
**dadurch gekennzeichnet,**
**dass** die Glasfasergewebelage (3) ein Drehergewebe mit sich an den Kreuzungsstellen gegenseitig durchdringenden Fäden (11, 11') ist.

4. Dachbelagbahnmaterial nach Anspruch 2 oder 3,
**dadurch gekennzeichnet,**
**dass** die sich kreuzenden Fäden zueinander im Abstand angeordnet sind und vorzugsweise Maschen mit Abmessungen von 5 x 5 mm bilden.

5. Dachbelagbahnmaterial nach Anspruch 1 bis 4,
**dadurch gekennzeichnet,**
**dass** die Appretur Styrol-Butadien-Kautschuk (SBR) ist.

6. Dachbelagbahnmaterial nach einem der Ansprüche 1 bis 5,
**dadurch gekennzeichnet,**
**dass** die Fäden (11,11') einen abgeflachten Querschnitt, insbesondere ovalen Querschnitt, aufweisen.

7. Dachbelagbahnmaterial nach Anspruch 6,
**dadurch gekennzeichnet,**
**dass** sich die längere Querschnittsachse parallel zu der Lage (2) aus Elastomermaterial erstreckt.

8. Dachbelagbahnmaterial nach einem der Ansprüche 1 bis 7,
**dadurch gekennzeichnet,**
**dass** das Bahnmaterial selbstklebend mit einer durch eine Linerfolie (14) abgedeckten Kleberschicht (13) ausgebildet ist.

9. Dachbelagbahnmaterial nach Anspruch 8,
**dadurch gekennzeichnet,**
**dass** die Kleberschicht (13) eine Acrylatkleberschicht ist.

10. Verfahren zur Herstellung von Bahnmaterial zur Bildung von Dachbelägen, bei dem einer aus einem Kalander (4) austretenden Bahn (2) aus Elastomermaterial eine Bahn (3) aus einem mit einer Appretur versehenen Glasfasergewebe zugeführt und vor der Vulkanisierung der Bahn (2) aus Elastomermaterial mit der Bahn (2) aus Elastomermaterial durch Einpressen verbunden wird.

## Claims

1. Sheet material for forming roof coverings, having a layer (2) of elastomer material that is provided on its contact side with a further layer (3), wherein the further layer comprises a glass-fibre woven layer (3),
**characterized in that**
the glass-fibre woven layer (3) is provided with a finish and is pressed into the layer (2) of elastomer material before the vulcanization of said layer of elastomer material.

2. Roof-covering sheet material according to Claim 1,
**characterized in that**
the layer (3) is a woven layer, in particular woven layer of threads which cross one another, in particular threads which cross one another perpendicularly.

3. Roof-covering sheet material according to Claim 2,
**characterized in that**
the glass-fibre woven layer (3) is a leno-weave fabric having threads (11, 11') which pass through one another at the crossing points.

4. Roof-covering sheet material according to Claim 2 or 3,
**characterized in that**
the threads which cross one another are arranged spaced apart from one another and preferably form meshes with dimensions of 5 x 5 mm.

5. Roof-covering sheet material according to Claim 1 to 4,
**characterized in that**
the finish is styrene-butadiene rubber (SBR).

6. Roof-covering sheet material according to one of Claims 1 to 5,
**characterized in that**
the threads (11, 11') have a flattened cross section, in particular oval cross section.

7. Roof-covering sheet material according to Claim 6,
**characterized in that**
the longer cross-sectional axis extends parallel to the layer (2) of elastomer material.

8. Roof-covering sheet material according to one of Claims 1 to 7,
**characterized in that**
the sheet material is formed in a self-adhesive manner with an adhesive layer (13), which is covered by a liner film (14).

9. Roof-covering sheet material according to Claim 8,
**characterized in that**
the adhesive layer (13) is an acrylate adhesive layer.

10. Method for producing sheet material for forming roof coverings, in which a sheet (3) of a glass-fibre woven fabric provided with a finish is fed to a sheet (2) of elastomer material that emerges from a calender (4) and, prior to the vulcanization of the sheet (2) of elastomer material, is connected to the sheet (2) of elastomer material by being pressed in.

## Revendications

1. Matériau en bande pour former des couvertures de toiture, comportant une couche (2) en matériau élastomère qui, sur son côté de pose, est pourvue d'une autre couche (3), l'autre couche comprenant une couche de tissu en fibres de verre (3),
**caractérisé en ce que**
la couche de tissu en fibres de verre (3) est pourvue d'un apprêt et est pressée dans la couche (2) en matériau élastomère avant la vulcanisation de la couche en matériau élastomère.

2. Matériau en bande pour couverture de toiture selon la revendication 1,
**caractérisé en ce que**
la couche (3) est une couche de tissu, en particulier une couche de tissu de fils qui se croisent, en particulier de fils qui se croisent perpendiculairement.

3. Matériau en bande pour couverture de toiture selon la revendication 2,
**caractérisé en ce que**
la couche de tissu en fibres de verre (3) est un tissu de gaze avec des fils (11, 11') qui s'interpénètrent aux points de croisement.

4. Matériau en bande pour couverture de toiture selon la revendication 2 ou 3,
**caractérisé en ce que**
les fils qui se croisent sont disposés à distance les uns des autres et forment de préférence des mailles de dimensions de 5 x 5 mm.

5. Matériau en bande pour couverture de toiture selon l'une des revendications 1 à 4,
**caractérisé en ce que**
l'apprêt est du caoutchouc styrène-butadiène (SBR).

6. Matériau en bande pour couverture de toiture selon l'une des revendications 1 à 5,
**caractérisé en ce que**
**que** les fils (11, 11') ont une section transversale aplatie, en particulier une section transversale ovale.

7. Matériau en bande pour couverture de toiture selon la revendication 6,
**caractérisé en ce que**
le long axe de section transversale s'étend parallèlement à la couche (2) en matériau élastomère.

8. Matériau en bande pour couverture de toiture selon l'une des revendications 1 à 7,
**caractérisé en ce que**
le matériau en bande est auto-adhésif avec une couche adhésive (13) recouverte par un film de revêtement (14).

9. Matériau en bande pour couverture de toiture selon la revendication 8,
**caractérisé en ce que**
la couche adhésive (13) est une couche adhésive d'acrylate.

10. Procédé de production d'un matériau en bande pour former des couvertures de toiture, dans lequel une bande (3) de tissu en fibres de verre pourvu d'un apprêt est amenée à une bande (2) en matériau élastomère sortant d'une calandre (4) et est reliée à la bande (2) en matériau élastomère par pressage, avant que la bande (2) en matériau élastomère ne soit vulcanisée.
